# FASCICULE DE BREVET EUROPEEN

(11) **EP 1 964 502 B1**
(45) Date de publication et mention de la délivrance du brevet: **22.02.2012**
(21) Numéro de dépôt: 08370002.1
(22) Date de dépôt: 31.01.2008
(51) Int. Cl.: A47L 9/24, F16L 25/10, F16L 27/12

(54) **Dispositif de raccordement de tuyaux pour un système d'aspiration**
Anschlussvorrichtung für Rohrleitungen eines Ansaugsystems
Pipe connection device for a suction system

(30) Priorité: 28.02.2007 FR 0701449
(43) Date de publication de la demande: 03.09.2008
(73) Titulaire: SA Gerlon Société Anonyme, 80580 Pont Remy (FR)
(72) Inventeur: Chapotard, Philippe, 80580 Pont Remy (FR)
(74) Mandataire: Boubal, Denis Henri Jacques

(56) Documents cités:
- FR-A1- 2 300 955
- GB-A- 2 273 752
- US-A- 5 046 761
- US-A- 5 462 311

## Description

La présente invention est relative à un dispositif de raccordement de tuyaux pour un système d'aspiration.

Plus particulièrement, la présente invention est relative à un dispositif de raccordement de tuyaux pour système d'aspiration comprenant au moins un premier tuyau assujetti par son extrémité proximale au système d'aspiration, et un deuxième tuyau dont l'extrémité proximale est raccordée à l'extrémité distale dudit premier tuyau, ledit dispositif présentant des moyens pour maintenir assemblées, et de façon étanche, l'extrémité distale dudit premier tuyau et l'extrémité proximale dudit deuxième tuyau.

En matière de dispositif et système d'aspiration, il est connu d'utiliser divers éléments de travail interchangeables, tels que des brosses ou des suceurs, voire certains outils de bricolage qui engendrent en eux-mêmes de la poussière lors de leur utilisation, telles que par exemple des ponceuses.

Dans le domaine des dispositifs de raccordement de tuyaux pour système d'aspiration, il est connu des dispositifs constitués par deux tuyaux, chaque tuyau comprenant une de ses extrémités moulée, type mâle/femelle de façon à ce que les deux extrémités s'emboîtent l'une dans l'autre de façon étanche.

Ce type de dispositif est adapté pour chaque tuyau et ne peut pas être utilisé lorsqu'on décide de raccorder un tuyau à un autre tuyau qui n'a pas été spécifiquement prévu pour ce raccordement.

Pour faciliter un raccordement plus universel, il est également connu de prévoir l'une et/ou l'autre des extrémités de tuyaux à raccorder selon une forme conique. Cependant, il est nécessaire de ce fait d'augmenter le diamètre desdits tuyaux.

On connaît également des dispositifs de raccordement constitués d'un manchon plus ou moins adapté aux terminaisons des tuyaux qui est maintenu sur celles-ci aux moyens de colliers de serrage à vis.

Cependant, de tels dispositifs de raccordement sont rarement totalement universels, de construction complexe et sont rarement satisfaisants sur le plan de l'étanchéité.

On connaît du document GB-2.273.752 un système de raccordement universel entre deux tuyaux.

L'un des tuyaux est inséré dans l'autre et réalise l'étanchéité au moyen d'un joint cylindrique déformable. Ce tuyau de plus petit diamètre est donc pourvu d'un joint déformable et d'une bague d'actionnement, de forme tronconique. Lors du raccordement, le tuyau de plus petit diamètre est inséré dans le tuyau de plus grand diamètre. La bague d'actionnement est alors vissé afin de comprimer le joint déformable, augmentant ainsi son diamètre jusqu'à la mise en contact circulaire du joint avec le diamètre interne du tuyau de plus grand diamètre. L'étanchéité entre les deux tuyaux est réalisée. Selon ce document, la partie tronconique de la bague d'actionnement engage avec le bord du tuyau de plus grand diamètre afin d'assurer un maintien stable entre les tuyaux.

On note toutefois qu'un contact circulaire continue entre la partie tronconique de la bague d'actionnement et le bord du tuyau de plus grand diamètre ne peut être rendu possible que dans le cas d'un bord parfaitement lisse et circulaire, notamment sans la présence de brèche, clavette, rainure ou autres conformations, telles qu'elles peuvent être observées au niveau des extrémités des tuyaux flexibles des systèmes d'aspiration afin de faciliter le raccordement.

La présente invention a donc pour but de remédier à ces inconvénients en proposant un dispositif de raccordement universel, de construction simple, de faible coût de revient et pouvant être utilisé pour tout type de tuyau.

D'autres buts et avantages de l'invention apparaîtront au cours de la description qui va suivre qui n'est donnée qu'à titre indicatif et qui n'a pas pour but de la limiter.

L'invention concerne un dispositif de raccordement de tuyaux, type universel, pour système d'aspiration comprenant au moins un premier tuyau assujetti par son extrémité proximale au système d'aspiration, et un deuxième tuyau dont l'extrémité proximale est raccordée à l'extrémité distale dudit premier tuyau, ledit dispositif présentant des moyens pour maintenir assemblées, et de façon étanche, l'extrémité distale dudit premier tuyau et l'extrémité proximale dudit deuxième tuyau.

Selon l'invention, lesdits moyens pour maintenir assemblées, et de façon étanche, les deux dites extrémités comportent des moyens de raccordement aptes à coopérer avec le système d'aspiration lors de la dépression créée, constituées par les deux dites extrémités desdits tuyaux et par un élément en forme de butée servant de joint audit premier tuyau, se présentant sous la forme d'une rondelle placée autour de ladite extrémité proximale dudit deuxième tuyau.

La présente invention concerne également l'utilisation d'un tel dispositif de raccordement, dans un système d'aspiration, équipé d'éléments de travail interchangeables.

L'invention sera mieux comprise à la lecture de la description suivante, accompagnée des dessins en annexe parmi lesquels :
- la figure 1 représente un système d'aspiration comprenant un dispositif de raccordement de tuyaux selon la présente invention,
- la figure 2 représente en coupe de façon schématique un dispositif de raccordement de tuyaux tel que mis en oeuvre à la figure 1,
- la figure 3 est une vue en perspective d'un dispositif de raccordement de tuyaux mis en oeuvre selon la présente invention.

L'invention concerne un dispositif 1 de raccordement de tuyaux, type universel, pour système d'aspiration 2 comprenant au moins, un premier tuyau 3 assujetti par son extrémité proximale 4 au système d'aspiration 2, et un deuxième tuyau 5 dont l'extrémité proximale 6 est raccordée à l'extrémité distale 7 dudit premier tuyau 3. En outre, ledit dispositif 1 présente des moyens pour maintenir assemblées et étanches l'extrémité distale 7 dudit premier tuyau 3 et l'extrémité proximale 6 dudit deuxième tuyau 5.

Selon l'invention, lesdits moyens pour maintenir assemblées, et de façon étanche, les deux dites extrémités 6, 7 comportent des moyens de raccordement aptes à coopérer avec le système d'aspiration 2 lors de la dépression créée.

On entend par système d'aspiration 2, tout système capable de créer une dépression à son intérieur. A titre d'exemple non limitatif, nous pouvons mentionner les systèmes d'aspiration domestique utilisés lors des tâches ménagères, tels que les aspirateurs classiques.

Il est à noter que le premier tuyau 3 peut être, tel qu'illustré, le tuyau flexible raccordé à son extrémité proximale au système d'aspiration, ou encore, directement, l'orifice rigide du système d'aspiration sur lequel se raccorde le tuyau flexible.

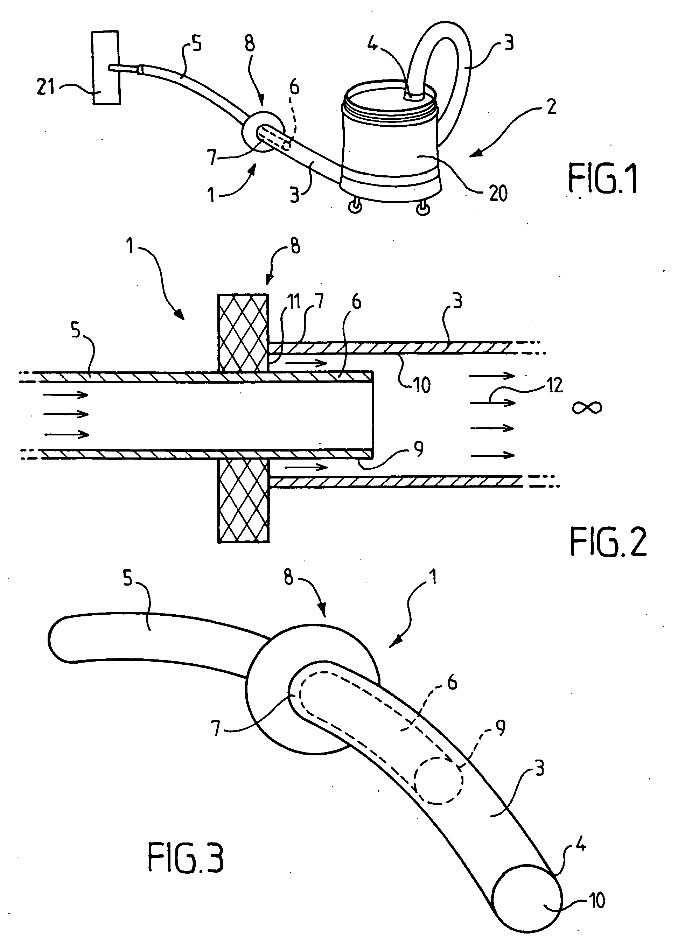

Comme le montre la figure 1, l'aspiration 20 comporte un premier tuyau 3 flexible raccordé au niveau de son extrémité proximale 4, et généralement un second tuyau 5, notamment dit de rallonge, équipé à son extrémité distale d'un élément de travail 21. Il est à noter ici qu'il peut aussi s'agir de tout élément de travail interchangeable tel que des brosses ou des suceurs, voire certains outils de bricolage qui engendrent en eux mêmes de la poussière lors de leur utilisation, tels que par exemple des ponceuses.

Tels que montrés à la figure 2, lesdits moyens de raccordement sont constitués par les deux dites extrémités desdits tuyaux 3, 5 et par un élément 8 en forme de butée servant de joint audit premier tuyau 3.

Selon la présente invention et tel que montré à la figure 3, l'élément 8 en forme de butée, et servant de joint audit premier tuyau 3, se présente sous la forme d'une rondelle placée autour dudit tuyau 5. Le contour de la rondelle peut être, mais non nécessairement, circulaire, ou encore présenter tout autre forme. La rondelle peut présenter un orifice traversant ajusté pour assurer une étanchéité, voire une fixation amovible, entre le deuxième tuyau et ladite rondelle. Le diamètre de cet orifice peut être ainsi légèrement inférieur au diamètre externe de l'extrémité du deuxième tuyau grâce à l'élément 8 en matière souple, en mousse de polyuréthane. Selon un mode de réalisation non illustré, la rondelle peut être prévue monobloc avec le deuxième tuyau 5.

Tel que montré aux figures 1, 2 et 3, le diamètre extérieur 9 dudit deuxième tuyau 5 est inférieur au diamètre intérieur 10 dudit premier tuyau 3, le diamètre dudit élément 8 étant quant à lui supérieur au diamètre extérieur dudit premier tuyau 3.

La différence de diamètre entre le tuyau 5 et le tuyau 3 permet de disposer, et d'introduire, en partie ledit deuxième tuyau 5 à l'intérieur dudit premier tuyau 3 lors dudit raccordement.

Le montage définit également un anneau 11 dit de succion, au niveau dudit élément 8 servant de joint, dont la hauteur est déterminée par la différence entre le diamètre inférieur du tuyau 3 et le diamètre extérieur du tuyau 5, et dont la surface permet grâce à l'aspiration de maintenir les extrémités des tuyaux de façon étanche, ledit élément 8 étant plaqué grâce à cette force contre l'extrémité distale 7 dudit premier tuyau 3' véhiculant le flux d'aspiration schématisé sur la figure 2 par les flèches 12.

L'extension du tuyau 5 introduite à l'intérieur du tuyau 3 peut varier, mais elle doit prendre en compte la valeur de la dépression créée, ainsi que la longueur desdits tuyaux 3 et 5, et en particulier la longueur dudit tuyau 5. En particulier, selon les dimensions, on doit introduire à l'intérieur du tuyau 3 une longueur suffisante afin de garantir un meilleur raccordement.

Selon la présente invention, l'élément 8 est en mousse, dérivé de chlorure de polyvinyle ou du polyuréthane.

Il est à remarquer que le choix de l'utilisation d'une matière de type mousse ou similaire permet en outre de s'affranchir des dimensions géométriques de l'extrémité 7 du tuyau 3 puisque, par exemple, grâce à la force créée par la dépression du système d'aspiration, ladite extrémité va pouvoir pénétrer dans la matière dudit élément 8.

Aussi, le dispositif de la présente invention peut permettre le raccordement d'un embout de tuyau ébréché, ou équipé de divers détrompeurs. De même, la forme dudit embout restant libre, le dispositif de l'invention permettra sans problème de raccorder des tuyaux ovalisés.

Par exemple, on a obtenu de bons résultats avec undit premier tuyau 3 de dimension intérieure de l'ordre de 30 mm, un dit second tuyau 5 de dimension extérieure de l'ordre de 25 mm, cette dernière pénétrant dans ledit premier tuyau sur une distance de l'ordre de 100 mm. Bien naturellement, ces dimensions sont présentées pour illustrer l'invention, mais ne sont en aucun cas limitatives.

Selon un mode avantageux de la présente invention, au moins le deuxième tuyau 5 est un tuyau souple pour autoriser un bon maintien dudit élément 8 grâce à la dépression du système d'aspiration.

Selon l'invention, le dispositif de raccordement de tuyaux tel que décrit dans la présente invention peut être utilisé dans tout système d'aspiration et, notamment, dans un système d'aspiration pour nettoyer les sols et/ou tentures.

De façon avantageuse, l'utilisation du dispositif de raccordement de tuyaux, selon la présente invention, sera particulièrement adaptée dans un système d'aspiration équipé d'éléments de travail interchangeables tels que décrits précédemment.

Naturellement, d'autres modes de mise en oeuvre, à la portée de l'homme de l'art auraient pu être envisagés sans pour autant sortir du cadre de l'invention telle que définie par les revendications.

## Revendications

1. Dispositif (1) de raccordement de tuyaux, universel, pour système d'aspiration (2) comprenant au moins un premier tuyau (3) assujetti par son extrémité proximale (4) au système d'aspiration (2), et un deuxième tuyau (5) dont l'extrémité proximale (6) est raccordée à l'extrémité distale (7) dudit premier tuyau (3), ledit dispositif (1) présentant des moyens pour maintenir assemblées, et de façon étanche, l'extrémité distale (7) dudit premier tuyau (3) et l'extrémité proximale (6) dudit deuxième tuyau (5), **caractérisé en ce que** lesdits moyens pour maintenir assemblées, et de façon étanche, les deux dites extrémités (6, 7) consistent en des moyens de raccordement aptes à coopérer avec le système d'aspiration (2) lors de la dépression créée pour maintenir assemblées, et de façon étanche, les deux dites extrémités (6, 7) uniquement grâce à la dépression créée par le système d'aspiration, constitués par les deux dites extrémités (6, 7) desdits tuyaux (3, 5) et par un élément (8) en forme de butée en matière souple servant de joint et de butée audit premier tuyau (3), se présentant sous la forme d'une rondelle placée autour de ladite extrémité proximale (6) dudit deuxième tuyau (5), ladite rondelle étant en mousse dans une matière choisie parmi le dérivé de chlorure de polyvinyle ou le polyuréthane.

2. Dispositif selon la revendication 1, dans lequel la rondelle en matière souple présente un orifice traversant ajusté pour assurer une étanchéité, voire une fixation amovible, entre le deuxième tuyau (5) et l'élément (8).

3. Dispositif (1) selon la revendication 1 ou 2, **caractérisé en ce que** le diamètre extérieur (9) dudit deuxième tuyau (5) est inférieur au diamètre intérieur (10) dudit premier tuyau (3).

4. Dispositif (1) selon les revendications 1 ou 3, dans lequel ledit deuxième tuyau (5) est disposé en partie à l'intérieur dudit premier tuyau (3) lors dudit raccordement.

5. Dispositif (1) selon l'une des revendications 1 à 4, dans lequel le deuxième tuyau (5) est un tuyau souple.

6. Utilisation d'un dispositif (1) selon l'une quelconque des revendications 1 à 5 dans un système d'aspiration (4) équipé d'éléments de travail interchangeables.

## Claims

1. Universal device (1) for connecting pipes for a suction system (2) comprising at least one first pipe (3) slaved by its proximal end (4) to the suction system (2), and a second pipe (5) of which the proximal end (6) is connected to the distal end (7) of said first pipe (3), said device (1) having means for maintaining assembled, and in a tight manner, the distal end (7) of said first pipe (3) and the proximal end (6) of said second pipe (5), **characterised in that** said means for maintaining assembled, and in a tight manner, the two said ends (6, 7) consist in means for connecting able to cooperate with the suction system (2) during the vacuum created in order to maintain assembled, and in a tight manner, the two said ends (6, 7) thanks solely to the vacuum created by the suction system, comprised of the two said ends (6, 7) of said pipes (3, 5) and by an element (8) in the form of a stop made of flexible material used as a seal and stop to said first pipe (3), having the form of a washer placed around said proximal end (6) of said second pipe (5), said washer being made of foam in a material chosen from among the derivative of polyvinyl chloride or polyurethane.

2. Device according to claim 1, wherein the washer made of flexible material has a pass-through adjusted to provide a seal, even a removable fastening, between the second pipe (5) and the element (8).

3. Device (1) according to claim 1 or 2, **characterised in that** the outside diameter (9) of said second pipe (5) is less than the inside diameter (10) of said first pipe (3).

4. Device (1) according to claims 1 or 3, wherein said second pipe (5) is arranged in part inside said first pipe (3) during said connection.

5. Device (1) according to one of claims 1 to 4, wherein the second pipe (5) is a hose.

6. Usage of a device (1) according to any of claims 1 to 5 in a suction system (4) provided with interchangeable working elements.

## Patentansprüche

1. Universelle Vorrichtung (1) zur Verbindung von Rohren für ein Ansaugsystem (2), umfassend mindestens ein erstes Rohr (3), das durch sein proximales Ende (4) am Ansaugsystem (2) befestigt ist, und ein zweites Rohr (5), dessen proximales Ende (6) mit dem distalen Ende (7) des ersten Rohrs (3) verbunden ist, wobei die Vorrichtung (1) Mittel aufweist, um das distale Ende (7) des ersten Rohrs (3) und das proximle Ende (6) des zweiten Rohrs (5) verbunden zu halten, und dies auf dichte Weise, **dadurch gekennzeichnet, dass** die Mittel, um die zwei Enden (6, 7) verbunden zu halten, und dies auf dichte Weise, aus Verbindungsmitteln bestehen, die dazu ausgelegt sind, mit dem Ansaugsystem (2) bei Unterdruck zusammenzuarbeiten, der erzeugt wird, um die zwei Enden (6, 7) zusammen zu halten, und dies auf dichte Weise, ausschließlich dank des Unterdrucks, der vom Ansaugsystem erzeugt wird, bestehend aus den zwei Enden (6, 7) der Rohre (3, 5) und aus einem Element (8) in Form eines Anschlags aus einem weichen Material, das als Verbindung und als Anschlag für das erste Rohr (3) dient, das die Form einer Unterlegscheibe aufweist, die um das proximale Ende (6) des zweiten Rohrs (5) angebracht ist, wobei die Unterlegscheibe aus Schaum aus einem Material besteht, ausgewählt aus dem Derivat von Polyvinylchlorid oder Polyurethan.

2. Vorrichtung nach Anspruch 1, wobei die Unterlegscheibe aus weichem Material eine justiert querende Öffnung aufweist, um eine Dichte, ja sogar eine lösbare Befestigung zwischen dem zweiten Rohr (5) und dem Element (8) sicherzustellen.

3. Vorrichtung (1) nach Anspruch 1 oder 2, **dadurch gekennzeichnet, dass** der Außendurchmesser (9) des zweiten Rohrs (5) kleiner als der Innendurchmesser (10) des ersten Rohres (3) ist.

4. Vorrichtung (1) nach Anspruch 1 oder 3, wobei bei der Verbindung das zweite Rohr (5) zum Teil im Inneren des ersten Rohrs (3) angebracht ist.

5. Vorrichtung (1) nach einem der Ansprüche 1 bis 4, wobei das zweite Rohr (5) ein Schlauch ist.

6. Verwendung einer Vorrichtung (1) nach einem der Ansprüche 1 bis 5 in einem Ansaugsystem (4), ausgestattet mit auswechselbaren Arbeitselementen.
